# EUROPÄISCHE PATENTSCHRIFT

(11) **EP 3 680 138 B1**
(45) Veröffentlichungstag und Bekanntmachung des Hinweises auf die Patenterteilung: **06.10.2021**
(21) Anmeldenummer: 20150829.8
(22) Anmeldetag: 09.01.2020
(51) Int. Cl.: B60W 10/06, B60W 10/08, B60W 10/30, B60W 20/10, B60W 30/188, B60W 50/06

(54) **STEUERUNG FÜR EINE MOBILE ARBEITSMASCHINE, REGELKREIS, VERFAHREN UND ARBEITSMASCHINE**
CONTROL FOR A MOBILE WORK MACHINE, CONTROL CIRCUIT, METHOD AND WORK MACHINE
COMMANDE POUR UNE MACHINE DE TRAVAIL MOBILE, CIRCUIT DE RÉGULATION, PROCÉDÉ ET MACHINE DE TRAVAIL

(30) Priorität: 14.01.2019 DE 102019200327
(43) Veröffentlichungstag der Anmeldung: 15.07.2020
(73) Patentinhaber: Robert Bosch GmbH, 70442 Stuttgart (DE)
(72) Erfinder: Schleyer, Markus, 71640 Ludwigsburg (DE); Lopez Pamplona, Alejandro, 72186 Empfingen (DE)

(56) Entgegenhaltungen:
- DE-A1-102004 062 012
- DE-A1-102010 030 382
- DE-A1-102012 014 462

## Beschreibung

### Gebiet der Erfindung

Die Erfindung betrifft eine Steuerung für eine mobile Arbeitsmaschine gemäß dem Oberbegriff des Anspruchs 1. Des Weiteren geht diese Erfindung von einem Regelkreis für diese Steuerung, ein Verfahren mit einer solchen Steuerung und einer Arbeitsmaschine mit dieser Steuerung aus.

### Hintergrund der Erfindung

Aus dem Stand der Technik sind mobile Arbeitsmaschinen bekannt, die üblicherweise mit Verbrennungsmotoren als Hauptleistungsquelle ausgestattet sind. In den letzten Jahren werden jedoch immer häufiger hybride Topologien des Antriebsstranges eingesetzt. Diese Topologien weisen üblicherweise eine oder mehrere Leistungsquellen auf der Kurbelwelle des Verbrennungsmodus auf. Die Leistungsquellen sind zur Leistungsversorgung durch eine rotierende Welle, beispielsweise der Kurbelwelle und/oder eine Welle die sich an die Kurbelwelle anschließt, mit unterschiedlichen Verbrauchern, wie beispielsweise mit einer Arbeitshydraulik, einem Hilfsaggregat und einer Zapfwelle, verbunden. Die rotierende Welle ist üblicherweise drehzahlgeregelt, wobei die Drehzahlregelung üblicherweise von der Steuerung des Verbrennungsmotors übernommen wird. Die gewünschte Drehzahl wird dabei von den Verbrauchern und/oder Akteuren in der Maschine vorgegeben, wie beispielsweise von einem Fahrer über das Gaspedal und/oder von einer Anforderung der Arbeitshydraulik. Die Drehzahlregelung erfolgt normalerweise derart, dass ein PID-Regler ein Stelldrehmoment vorgibt, wenn eine Abweichung einer Ist-Drehzahl der Welle von einer Soll-Drehzahl festgestellt wurde und der Verbrennungsmotor darauf mit einer Änderung seiner Leistungsabgabe die Drehzahl regelt, sodass sie die Soll-Drehzahl wieder erreicht. Dies kann jedoch zu starken Einbrüchen in der Drehzahl der Welle führen, da der Verbrennungsmotor nur reagiert, wenn die Drehzahl bereits abgesenkt ist. Diese starken Änderungen in der Ist-Drehzahl der Welle sind störend für den Betrieb. Auch durch die Kombination eines Verbrennungsmotors mit beispielsweise einem Elektromotor, der eine schnellere Drehmomentdynamik als ein Verbrennungsmotor aufweist, kann dieses Problem nicht gelöst werden. Der Verbrennungsmotor kann in diesem Fall beispielsweise die Drehzahl regeln, indem beispielsweise von einem Steuergerät des Verbrennungsmotors berechnet wird, wieviel Drehmoment der Verbrennungsmotor leisten muss, damit die Drehzahl eingestellt werden kann. Da jedoch keine Kommunikation zwischen Elektromotor und Verbrennungsmotor stattfindet, kann der Elektromotor den Verbrennungsmotor nicht mit einem geeigneten Drehmoment unterstützen. Die Drehzahlveränderung können durch die Kombination eines Verbrennungsmotors mit einem Elektromotor zwar abgeschwächt, beispielsweise wenn eine übergeordnete Steuerung vorhanden ist, die bestimmen kann, wieviel Drehmoment der Elektromotor zur Unterstützung beitragen soll, jedoch nicht verhindert werden.

In DE 10 2010 030 382 A1 ist ein Verfahren zum Betreiben eines Antriebsstrangs offenbart. Der Antriebsstrang umfasst eine drehzahlgeregelte Brennkraftmaschine und eine sekundäre Antriebsquelle, wobei diese eine Verzögerung und/oder Reduktion einer Momentanforderung für die Brennkraftmaschine kompensiert.

### Offenbarung der Erfindung

Demgegenüber liegt der Erfindung die Aufgabe zugrunde, eine vorrichtungstechnisch einfache, kostengünstige und effiziente Steuerung für eine mobile Arbeitsmaschine zu schaffen, die die Drehzahl derart steuert, sodass sie in einem optimalen Drehzahlbereich ist. Außerdem soll ein kostengünstiges und effizientes Verfahren zur Steuerung einer mobilen Arbeitsmaschine und eine kostengünstige und vorrichtungstechnische einfachere Arbeitsmaschine mit dieser Steuerung geschaffen werden.

Diese Aufgabe hinsichtlich der Steuerung wird gelöst gemäß den Merkmalen des Anspruchs 1. Des Weiteren wird die Aufgabe hinsichtlich des Verfahrens gemäß den Merkmalen des Anspruchs 12 gelöst. Die Aufgabe hinsichtlich der Arbeitsmaschine wird gelöst gemäß den Merkmalen des Anspruchs 13.

Vorteilhafte Weiterbildungen der Erfindung sind Gegenstand der Unteransprüche.

Erfindungsgemäß ist eine Steuerung für eine mobile Arbeitsmaschine vorgesehen. Die Steuerung weist zumindest zwei Hauptleistungsteilnehmer auf, beispielsweise einen Verbrennungsmotor und/oder ein Elektromotor, und zumindest einen Leistungsteilnehmer, beispielsweise eine Arbeitshydraulik und/oder eine Zapfwelle und/oder ein Fahrantrieb. Die Hauptleistungsteilnehmer und der zumindest eine Leistungsteilnehmer sind durch eine rotierende Welle verbunden, wobei die Hauptleistungsteilnehmer zur Aufnahme und/oder zur Abgabe von Leistung konfiguriert sind. Der Leistungsteilnehmer ist ebenso zur Aufnahme und Abgabe von Leistung konfiguriert. Die Hauptleistungsteilnehmer geben dabei vorzugsweise hauptsächlich oder ausschließlich Leistung an die Welle ab und treiben diese an und der Leistungsteilnehmer nimmt vorzugsweise hauptsächlich oder ausschließlich Leistung auf und bremst dadurch die Welle ab. Des Weiteren kann der Leistungsteilnehmer eine Leistungsanforderung haben, das heißt er hat eine Wunschleistung zur Aufnahme und/oder eine Wunschleistung zur Abgabe. Das heißt, die Leistungsanforderungen können sowohl positiv als auch negativ sein. Beispielsweise kann ein Fahrantrieb eine Leistungsabgabe anfordern bei einem Bremsvorgang und eine Leistungsaufnahme bei einer Beschleunigung. Außerdem weisen die Steuerung zumindest einen Drehzahlregler auf. Der Drehzahlregler regelt dabei während des Betriebes der Arbeitsmaschine die Drehzahl der rotierenden Welle, indem dieser einen der Hauptleistungsteilnehmer entsprechend ansteuert. Mit anderen Worten kann die Drehzahl der rotierenden Welle über den Drehzahlregler von den verschiedenen Hauptleistungsteilnehmern geregelt werden durch eine Aufnahme von Leistung oder durch eine Abgabe von Leistung des Hauptleistungsteilnehmers, der durch den Drehzahlregler geregelt ist. Dabei kann die Ansteuerung der verschiedenen Hauptleistungsteilnehmer vorzugsweise abwechselnd durch den Drehzahlregler erfolgen, es ist jedoch auch möglich, dass der Drehzahlregler über einen langen Zeitraum oder im Wesentlichen ausschließlich einen Hauptleistungsteilnehmer ansteuert. Es kann also im Betrieb bei Bedarf die Drehzahlregelung von verschiedenen Hauptleistungsteilnehmer erfolgen, wobei dies über den Drehzahlregler geregelt ist und wobei immer nur genau ein Hauptleistungsteilnehmer von dem Drehzahlregler angesteuert ist. Die Wahl, welcher Hauptleistungsteilnehmer von dem Drehzahlregler angesteuert ist, ist in Abhängigkeit einer Änderung der Leistungsanforderung bestimmt. Mit anderen Worten kann jeweils ein anderer Hauptleistungsteilnehmer die Drehzahlreglung übernehmen, je nachdem wie stark und/oder wie schnell die Leistungsanforderung des Leistungsteilnehmers sich ändert. Mit anderen Worten kann eine dynamische Übergabe der Drehzahlregelfunktion erfolgen, je nachdem welche Leistungsquelle am besten geeignet ist, das heißt welcher Hauptleistungsteilnehmer eine Abweichung von Soll-Drehzahl und Ist-Drehzahl eher verhindert und/oder reduziert in Abhängigkeit der Höhe und/oder der Geschwindigkeit der Änderung der Leistungsanforderung. Sind beispielsweise ein Verbrennungsmotor und ein Elektromotor als Hauptleistungsteilnehmer in der mobilen Arbeitsmaschine verbaut, so kann der Drehzahlregler über den Elektromotor bei einer schnellen Änderung der Leistungsanforderung die Drehzahl der Welle regeln, da der Elektromotor schneller auf Drehzahländerungen reagieren kann.

Ein Vorteil dieser Erfindung ist es, dass je nach Anwendung die Drehzahlregelung über den Drehzahlregler von Hauptleistungsteilnehmern ausgeführt werden kann und somit verschiedene Stärken und Schwächen der Hauptleistungsteilnehmer genutzt werden können. Beispielsweise kann bei einer schnellen Veränderung der Leistungsaufnahme des Leistungsteilnehmers ein Hauptleistungsteilnehmer die Drehzahlregelung übernehmen, der beispielsweise eine höhere Drehmomentdynamik aufweist und somit die Drehzahl schneller einer Soll-Drehzahl anpassen kann. Mit anderen Worten kann eine starke Änderung der Drehzahl durch die Erfindung verhindert werden, da jeweils der Hauptleistungsteilnehmer die Drehzahl der Welle regelt, der für den Anwendungsfall die besten Eigenschaften aufweisen und somit eine schnelle Angleichung der Ist-Drehzahl an die Soll-Drehzahl vornehmen kann und/oder eine Differenz zwischen Ist-Drehzahl und Soll-Drehzahl weitestgehend verhindert. Somit ist ein uneingeschränkter und effizienter Betrieb des Leistungsteilnehmers jederzeit möglich und des Weiteren ist es durch eine Verhinderung der Änderung der Drehzahl möglich den Energieverbrauch der Hauptleistungsteilnehmer, zum Beispiel den Diesel- und/oder Benzinverbrauch eines Verbrennungsmotors und/oder den Stromverbrauch eines Elektromotors, zu verringern. Das heißt eine Phlegmatisierung, besonders wenn ein Hauptleistungsteilnehmer ein Verbrennungsmotor ist, ist möglich. Zusätzlich hat diese Erfindung den Vorteil, dass die Effizienz des Gesamtsystems zu jeder Zeit hoch ist und außerdem die Funktion des Leistungsteilnehmers zu jeder Zeit im optimalen Drehzahlbereich und/oder im optimalen Leistungsbereich ausführbar ist.

Vorzugsweise kann die Leistungsanforderung eine momentane Leistungsanforderung und/oder eine statische Leistungsanforderung und/oder eine dynamische Leistungsanforderung sein. Die momentane Leistungsanforderung kann beispielsweise eine Leistungsanforderung zum aktuellen Zeitpunkt t sein. Die statische Leistungsanforderung kann beispielsweise eine Leistungsanforderung sein, die eine minimale Leistung darstellt, die für einen Leistungsteilnehmer zusätzlich vorgehalten wird für unvorhersehbare äußere Einflüsse, und kann als Reserve dienen. Die dynamische Leistungsanforderung kann je nach Arbeits-/Fahrfunktion vorgehalten werden und berücksichtigt eine Leistungsanforderung, welche in den nächsten Zeitschritten absehbar angefordert werden wird. Wenn der Leistungsteilnehmer beispielsweise der Fahrantrieb ist, kann eine momentane Leistungsanforderung die Stellung des Gaspedals abbilden. Die dynamische Leistungsanforderung kann beispielsweise angelegt werden, wenn ein Fahrer maximal beschleunigen möchte. Das heißt der Fahrantrieb kann eine dynamische Leistungsanforderung anfordern, die besagt, dass zeitnah eine hohe Leistung benötigt wird.

In einem weiteren Ausführungsbeispiel ist es möglich, dass die Steuerung zumindest zwei Drehzahlregler aufweist, wobei diese jeweils einem der Hauptleistungsteilnehmer zugeordnet werden können. Es ist auch möglich, dass nur einem Teil der Hauptleistungsteilnehmer oder allen Hauptleistungsteilnehmer ein Drehzahlregler zuordenbar ist. Die Drehzahlreglung der Welle kann dabei von verschiedenen Drehzahlreglern, insbesondere abwechselnd vorgenommen werden, wobei ein jeweiliger Drehzahlregler zumindest den Hauptleistungsteilnehmer ansteuern kann, dem er zugeordnet ist. Das heißt es kann im Betrieb bei Bedarf die Drehzahlregelung von einem Drehzahlregler auf den anderen Drehzahlregler übergeben werden und ein aktiver Drehzahlregler regelt dann die Drehzahl der Welle durch den Hauptleistungsteilnehmer, zu dem er zugeordnet ist.

Erfindungsgemäß steuert der Drehzahlregler zu jeder Zeit einen Hauptleistungsteilnehmer an, das heißt nur einer der Hauptleistungsteilnehmer wird von dem Drehzahlregler angesteuert, damit dieser die Drehzahl der Welle einstellt und/oder verstellt. Dies ist vorteilhaft, da mehrere von dem Drehzahlregler gleichzeitig angesteuerte Hauptleistungsteilnehmer die Funktionalität der Arbeitsmaschine einschränken kann. Weist die Steuerung zumindest zwei Drehzahlregler auf, so ist zu jederzeit ein Drehzahlregler aktiv, während der Drehzahlregler, der die Drehzahl nicht regelt inaktiv ist.

Es ist außerdem vorteilhaft, wenn der Hauptleistungsteilnehmer, der nicht von dem oder dem zugeordneten Drehzahlregler geregelt ist, ein Drehmoment einregelt. Das heißt der Hauptleistungsteilnehmer gibt ein Drehmoment ab, wobei dieses abhängig sein kann von der Drehzahl der rotierenden Welle. Mit anderen Worten findet ein momentengeregelter Betrieb eines Hauptleistungsteilnehmers statt, der nicht durch den oder seinem zugeordneten Drehzahlregler angesteuert ist, bei gleichzeitiger Übernahme der Drehzahlregelfunktion durch den anderen Hauptleistungsteilnehmer, der durch den oder seinem zugeordneten Drehzahlregler angesteuert ist.

Des Weiteren weist die Steuerung vorzugsweise eine Leistungsverwaltungseinrichtung auf. Diese kann vorzugsweise die Leistungsanforderung des Leistungsteilnehmers verwalten oder auch die Leistungsanforderung verschiedener Leistungsteilnehmer, wenn zumindest zwei Leistungsteilnehmer vorhanden sind. Die Leistungsverwaltungseinreichung kann bei mindestens zwei Leistungsteilnehmern beispielsweise eine summierte Leistungsanforderung bestimmen, also eine Gesamtleistungsanforderung, die die Leistungsanforderungen der Leistungsteilnehmer gesamtheitlich beschreibt. Des Weiteren kann die Leistungsverwaltungseinrichtung Leistungspotentiale der Hauptleistungsteilnehmer erfassen. Das Leistungspotential ist die Leistung, die ein Hauptleistungsteilnehmer bereitstellen kann. Die Leistungsverwaltungseinrichtung kann dabei ein aktuelles Leistungspotential erfassen, das heißt die Leistung die der Hauptleistungsteilnehmer bei der aktuellen Drehzahl bereitstellen kann und die Leistungsverwaltungseinrichtung kann ein maximales Leistungspotential erfassen, das heißt die Leistung, die ein Hauptleistungsteilnehmer maximal bereitstellen kann. Des Weiteren kann die Leistungsverwaltungseinrichtung ein Gesamtleistungspotential der Hauptleistungsteilnehmer bestimmen, dass das gesamte Potential aller Hauptleistungsteilnehmer ist. Die Leistungsverwaltungseinrichtung kann auch das aktuelle Gesamtleistungspotential und das maximale Gesamtleistungspotential bestimmen. Anhand dieser Leistungsdaten, das heißt der Leistungsanforderung und/oder der Gesamtleistungsanforderung und/oder des Gesamtleistungspotentials, kann die Leistungsverwaltungseinrichtung die Leistungsabgabe und die Leistungsaufnahme verschiedener Hauptleistungsteilnehmer und Leistungsteilnehmer bestimmen. Dies ist besonders vorteilhaft, wenn mehr als ein Leistungsteilnehmer in der mobilen Arbeitsmaschine integriert ist und somit kann die Leistungsverwaltungseinrichtung die bereitstehende Leistung, die von dem Hauptleistungsteilnehmer abgegeben wird, verteilen, sodass die Funktionen der verschiedenen Leistungsteilnehmer jederzeit optimal ausführbar sind. Dies erhöht die Effizienz des Gesamtsystems.

Des Weiteren ist es vorteilhaft, wenn die Leistungsverwaltungseinrichtung die Gesamtleistungsanforderung des oder der Leistungsteilnehmer erfasst und entsprechend dieser Gesamtleistungsanforderung zumindest ein Hauptleistungsteilnehmer entsprechend vorsteuern, das heißt die Leistungsverwaltungseinrichtung kann die Leistungsabgabe der Hauptleistungsteilnehmer vorzugsweise steuern. Mit anderen Worten nutzt die Leistungsverwaltungseinrichtung die Vorabinformationen über Leistungsanforderungen in naher Zukunft zur Verbesserung der Performance des oder der Drehzahlregler/s durch eine Drehmomentvorsteuerung. Die benötigte Leistung, also die Änderung der Leistungsanforderung, kann die Leistungsverwaltungseinrichtung beispielsweise an den oder die Drehzahlregler kommunizieren und somit kann dieser oder der aktive Drehzahlregler die Drehzahl der Welle über einen der Hauptleistungsteilnehmer derart regeln, dass genügend Leistung zur Verfügung steht. Denkbar ist auch, dass die Leistungsverwaltungseinrichtung bestimmt, welcher Hauptleistungsteilnehmer von dem Drehzahlregler angesteuert wird oder welcher Drehzahlregler welches Hauptleistungsteilnehmers aktiv ist. Besonders vorteilhaft ist es, wenn die Leistungsverwaltungseinrichtung dynamische Leistungsanforderungen der oder des Leistungsteilnehmers erfasst und somit abschätzen kann, wie viel Leistung zu einem späteren Zeitpunkt optimal zur Verfügung stehen sollte. Durch die Erfassung der dynamischen Leistungsanforderung, kann das System vorgesteuert werden, und somit auf eine zukünftige Änderung der Leistungsanforderung vorbereitet werden. Somit können Leistungsaufnahmeänderungen und/oder Leistungsabgabeänderungen der oder des Leistungsteilnehmers rechtzeitig kompensiert werden und/oder abgefangen werden, sodass keine Änderung der Drehzahl der rotierenden Welle vorliegt. Besonders vorteilhaft daran ist außerdem, dass, wenn ein Verbrennungsmotor und ein Elektromotor in der mobilen Arbeitsmaschine integriert sind, der Verbrennungsmotor auf diese Weise vorgesteuert werden kann und somit genügend Leistung rechtzeitig zur Verfügung steht. Große Änderungen der Gesamtleistungsanforderung kann der Elektromotor, der gewöhnlicher Weise eine kleinere maximale Leistung aufweist, als der Verbrennungsmotor, aber dafür eine größere Drehmomentdynamik, normalerweise nicht leisten. Mit anderen Worten kann der Elektromotor kleinere Schwankungen und/oder Änderungen der Leistungsanforderung abfangen und/oder kompensieren, sodass es zu keiner Drehzahländerung der Welle kommt, doch der Elektromotor ist nur in der Lage die Drehzahl schnell zu regeln, wenn er innerhalb seiner Leistungs- und Drehmomentgrenzen arbeitet. Deshalb ist es vorteilhaft, den Verbrennungsmotor bei großen Änderungen der Leistungsanforderungen vorzusteuern. Zu diesem Zeitpunkt kann der Drehzahlregler durch den Verbrennungsmotor die Drehzahl regeln oder der Drehzahlregler des Verbrennungsmotors kann aktiv sein, und somit eine Veränderung der Drehzahl der Welle zu verhindern. Durch die Vorsteuerung durch die Leistungsverwaltungseinrichtung kann gewährleistet sein, dass die Leistungsabgabe oder -aufnahme der Hauptleistungsteilnehmer einer zukünftigen Änderung der Leistungsanforderung der oder des Leistungsteilnehmer/s angepasst ist und somit kann ein optimaler Betrieb des oder der Leistungsteilnehmer/s gewährleistet werden.

Die Steuerung weist zudem zumindest eine universelle Schnittstelle auf, über die der oder die Drehzahlregler und/oder die Leistungsverwaltungseinrichtung und/oder die Hauptleistungsteilnehmer und/oder der oder die Leistungsteilnehmer untereinander kommunizieren.

Des Weiteren weist ein Hauptleistungsteilnehmer bevorzugt eine höhere Dynamik auf, als der andere Hauptleistungsteilnehmer. Eine höhere Dynamik bedeutet, dass der Hauptleistungsteilnehmer schneller Leistung abrufen kann, und somit schneller auf Änderungen der Leistungsanforderungen reagieren kann. Dies ist besonders vorteilhaft, wenn bei einer schnellen Änderung der Leistungsanforderung der Drehzahlregler die Drehzahlregelung durch den Elektromotor vornimmt oder der Drehzahlregler des Elektromotors aktiv ist. Somit kann eine Änderung der Drehzahl der Welle verhindert oder reduziert werden.

Des Weiteren weist der Hauptleistungsteilnehmer, der eine niedrige Dynamik aufweist, vorzugsweise ein höheres maximales Leistungspotential auf, als der Leistungsteilnehmer, der eine höhere Dynamik aufweist. Dies ist vorteilhaft, da somit der Hauptleistungsteilnehmer mit der geringeren Dynamik den Leistungsteilnehmern eine Grundleistung und/oder ein Grunddrehmoment zur Verfügung stellt. Somit kann der Hauptleistungsteilnehmer, der die Hauptleistung liefert, das heißt aufnimmt und abgibt, größtenteils in einem optimalen Bereich hinsichtlich Verbrauch und/oder Emission und/oder Geräuschemission betrieben werden. Mit anderen Worten kann der Hauptleistungsteilnehmer den Großteil der Leistung aufnehmen und/oder abgeben und der andere Hauptleistungsteilnehmer mit der höheren Dynamik kann schnelle Änderungen der Leistungsanforderungen abfangen. Somit kann die Effizienz der mobilen Arbeitsmaschine verbessert werden, das heißt die Emissionen hinsichtlich Verbrauch und/oder Schadstoffen und/oder Geräuschen minimiert werden.

Des Weiteren ist es zudem vorteilhaft, wenn der Drehzahlregler den Hauptleistungsteilnehmer mit der höheren Dynamik ansteuert oder der Drehzahlregler des Hauptleistungsteilnehmers mit der höheren Dynamik aktiv ist, wenn eine schnelle durch die Vorsteuerung der Leistungsverwaltungseinrichtung nicht abgedeckte Leistungsanforderung des oder der Leistungsteilnehmer/s abgerufen ist, das heißt wenn eine Änderung der Leistungsanforderung stattfindet, die von der Leistungsverwaltungseinrichtung nicht vorsteuerbar ist. Durch die Regelung der Drehzahl durch den Hauptleistungsteilnehmer mit der höheren Dynamik, wenn eine unvorhergesehene Änderung der Leistungsanforderung stattfindet, kann verhindert werden, dass die Drehzahl der rotierenden Welle sich stark ändert. Das heißt durch diese Regelung kann eine unvorhergesehene Änderung der Leistungsanforderung aufgefangen und/oder kompensiert werden, sodass die Drehzahländerung der Welle nur klein oder nicht vorhanden ist. Dies ist vorteilhaft, da durch die hohe Dynamik des Hauptleistungsteilnehmers die Drehzahl der Welle in einem Drehzahlbereich oder bei einer Drehzahl gehalten werden kann, sodass die Effizienz des Systems optimal ist. Des Weiteren können dadurch der oder die Funktion/en der oder des Leistungsteilnehmers immer ausgeführt werden, da die Leistungsanforderung/en erfüllt sind und die Ist-Drehzahl der Welle gar nicht oder nur wenig von der Soll-Drehzahl abweicht.

Des Weiteren ist es vorteilhaft, wenn ein Hauptleistungsteilnehmer ein Verbrennungsmotor ist und ein anderer Hauptleistungsteilnehmer ein Elektromotor. Zusätzlich können auch weitere Hauptleistungsteilnehmer in der mobilen Arbeitsmaschine integriert sein, beispielsweise ein weiterer Elektromotor und/oder ein weiterer Verbrennungsmotor.

Des Weiteren ist es vorteilhaft, wenn der Elektromotor eine höhere Dynamik und eine niedrige Leistung aufweist und der Verbrennungsmotor eine höhere Leistung. Somit kann der Verbrennungsmotor die Hauptleistung für die Arbeitsmaschinen bereitstellen und der Elektromotor kann durch die Regelung der Drehzahl über den oder seinen Drehzahlregler die Drehzahl der Welle regeln, wenn insbesondere eine schnelle Leistungsanforderungsänderung vorliegt. Dadurch, dass der Elektromotor zwar eine höhere Dynamik, aber keine große Leistung aufweist, kann auf einen großen Akku verzichtet werden und somit kann das Gewicht der Arbeitsmaschine geringgehalten werden. Das Gewicht der Arbeitsmaschine möglichst gering zu halten, kann den Vorteil haben, dass der Fahrantrieb dadurch weniger Energie verbraucht. Da die Energiedichte von Diesel und/oder Benzin groß ist und der Verbrennungsmotor die Hauptleistung für die Arbeitsmaschine bereitstellt, kann die Arbeitsmaschine außerdem eine Zeit ohne eine Betankung in Betrieb sein. Ein weiterer Vorteil dieser Konfiguration ist es, dass durch die Integration eines Elektromotors eine niedrige Dynamik des Verbrennungsmotors, die aus Gründen einer schärferen Abgasgesetzgebung und um die Abgasrichtlinien einzuhalten zunehmend reduziert ist, kompensiert werden kann. Durch die Kombination eines Elektromotors mit einem Verbrennungsmotor und der Integration dem oder den Drehzahlregler kann also eine Steuerung geschaffen sein, die ein möglichst geringes Gewicht, eine möglichst hohe Dynamik, eine möglichst gute Effizienz und möglichst geringe Emission hat.

Des Weiteren ist ein Regelkreis für die Steuerung definiert, wobei dieser eine Soll- und eine Ist-Drehzahl bekannt ist. Die Soll-Drehzahl kann beispielsweise durch die Leistungsverwaltungseinrichtung vorgegeben sein. Die Ist-Drehzahl kann beispielsweise durch eine Hauptleistungsteilnehmersteuerung, bei einem Verbrennungsmotor beispielsweise durch eine Motorsteuerung, abgegriffen werden und/oder durch einen Sensor. Der Sensor kann dabei vorzugsweise an der Welle angeordnet sein. Die Soll- und die Ist-Drehzahl werden dann einem Regler zugeführt, insbesondere einem PID-Regler, der auf Basis der Ist- und der Soll-Drehzahl eine Stellgröße bestimmt. Diese Stellgröße kann beispielsweise die eine benötigte Leistungsaufnahme oder -abgabe sein, die benötigt wird, damit die Soll-Drehzahl erreicht wird. Diese Stellgröße wird den oder an einen von mindestens zwei oder alle Drehzahlregler weitergegeben. Dabei können, wenn mindestens zwei Drehzahlregler integriert sind, die Drehzahlregler untereinander verbunden sein und somit können die Drehzahlregler bestimmen welcher Drehzahlregler die Drehzahlreglung übernimmt und/oder die Leistungsverwaltungseinrichtung kann beispielsweise bestimmen welcher Drehzahlregler die Drehzahlreglung übernimmt und diesem die Stellgröße übermitteln. Die Leistungsverwaltungseinrichtung kann auch dem Drehzahlregler weitergeben, welcher Hauptleistungsteilnehmer zu diesem Zeitpunkt ansteuerbar ist, um eine optimale Effizienz zu erreichen. Der oder einer der Drehzahlregler regelt in Abhängigkeit dessen einen oder den zugeordneten Hauptleistungsteilnehmer, sodass dieser die Leistung abgibt, die benötigt wird, um die Soll-Drehzahl zu erreichen. Es ist auch möglich, dass der Hauptleistungsteilnehmer Leistung aufnehmen muss, um die gewünschte Drehzahl zu erreichen. Die danach aktuelle Ist-Drehzahl der Welle wird wiederum weitergegeben an den Regler und somit kann eine neue Stellgröße bestimmt werden. Somit ist der Regelkreis geschlossen.

Ein Verfahren zur Steuerung der mobilen Arbeitsmaschine kann vorzugsweise einen ersten Schritt aufweisen, in dem die Soll-Drehzahl und die Ist-Drehzahl der Welle erfasst werden. Dabei kann die Soll-Drehzahl von der Leistungsverwaltungseinrichtung bestimmt werden. Die Leistungsverwaltungseinrichtung kann die Soll-Drehzahl in Abhängigkeit einer Leistungsanforderung der oder des Leistungsteilnehmers bestimmen. Danach kann aus der Ist- und der Soll-Drehzahl, eine Stellgröße ermittelt werden. Dies ist insbesondere abhängig von der Differenz der Soll-Drehzahl von der Ist-Drehzahl. Danach kann durch den oder einen der Drehzahlregler die Drehzahl der Welle angepasst werden, indem dieser die Leistungsaufnahme und/oder Leistungsabgabe eines der oder des zugeordneten Hauptleistungsteilnehmer/s regelt. Die Wahl welcher Hauptleistungsteilnehmer in dem Drehzahlregelbetrieb betrieben wird, kann beispielsweise durch die Differenz zwischen Soll-Drehzahl und Ist-Drehzahl und/oder durch die Stellgröße bestimmt werden.

Des Weiteren ist die Steuerung in eine Arbeitsmaschine integriert, das heißt es gibt eine Arbeitsmaschine mit der Steuerung.

Offenbart ist eine Steuerung für eine mobile Arbeitsmaschine mit zwei Hauptleistungsteilnehmern und zumindest einem Leistungsteilnehmer. Die Hauptleistungsteilnehmer und die Leistungsteilnehmer sind zum Leistungsaustausch über eine rotierende Welle verbunden. Des Weiteren weist die Steuerung zumindest einen Drehzahlregler auf, wobei der Drehzahlregler die Drehzahl der rotierenden Welle regelt und der Drehzahlregler über einen der Hauptleistungsteilnehmer die Drehzahl regeln.

### Kurze Beschreibung der Zeichnungen

Ein bevorzugtes Ausführungsbeispiel der Erfindung wird im Folgenden anhand schematischer Zeichnungen näher erläutert. Es zeigen:
Figur 1 ein schematisches Schaubild, das den Aufbau einer Steuerung gemäß einem Ausführungsbeispiel zeigt, und
Figur 2 einen Ablauf eines Verfahrens zur Steuerung einer mobilen Arbeitsmaschine.

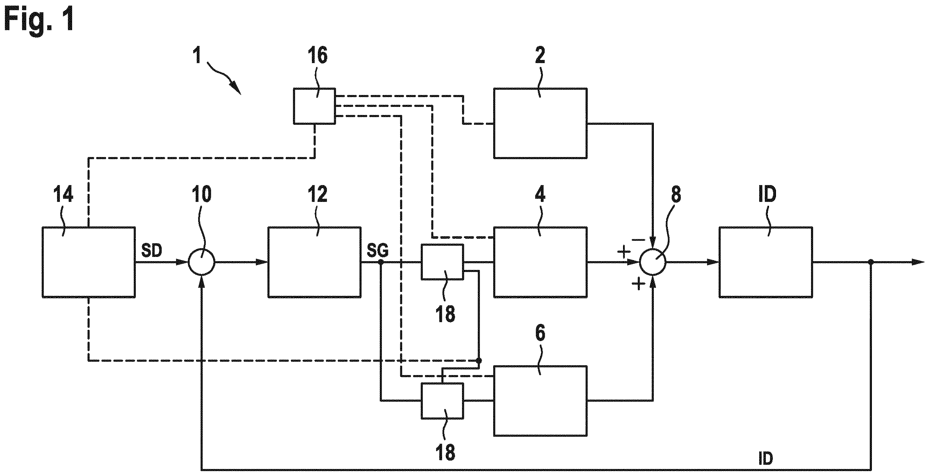

Figur 1 zeigt eine Steuerung 1, die einen Leistungsteilnehmer 2, beispielsweise eine Arbeitshydraulik, und zwei Hauptleistungsteilnehmer 4 und 6, beispielsweise einen Verbrennungsmotor und einen Elektromotor, aufweist. Der Leistungsteilnehmer 2 und die Hauptleistungsteilnehmer 4, 6 sind durch eine gemeinsame rotierende Welle 8 verbunden. Diese wird dabei von den Hauptleistungsteilnehmern 4, 6 hautsächlich mit Leistung gespeist, das heißt die Welle 8 wird angetrieben, während der Leistungsteilnehmer 2 die Welle 8 hauptsächlich abbremst. Durch beispielsweise einen Sensor und/oder ein Steuergerät eines Hauptleistungsteilnehmers 4, 6, kann die Ist-Drehzahl ID der Welle 8 bestimmt werden. Die Ist-Drehzahl ID wird dann vorzugsweise über eine Schnittstelle 10 an einen Regler 12 weitergegeben.

Des Weiteren wird eine Soll-Drehzahl SD über die Schnittstelle 10 an den Regler 12 weitergegeben, wobei die Soll-Drehzahl SD vorzugsweise durch eine Leistungsverwaltungseinrichtung 14 bestimmt ist. Diese kann außerdem über eine weitere Schnittstelle 16 mit dem Leistungsteilnehmer 12 und den Hauptleistungsteilnehmern 4 und 6 in Verbindung stehen und über diese Leistungsdaten, wie Leistungspotentiale und/oder Leistungsanforderungen, erfassen. Durch das Erfassen der Leistungsdaten, kann die Leistungsverwaltungseinrichtung 14 eine Soll-Drehzahl SD bestimmen, die an der Welle 8 anliegen kann, damit sämtliche Funktionen einer Arbeitsmaschine ausführbar sind, die die Steuerung 1 einsetzt, und zudem eine optimale Effizienz vorliegt. Der Regler 12 kann dann aus der Differenz zwischen Ist-Drehzahl ID und Soll-Drehzahl SD eine Stellgröße SG ermitteln, wobei diese Stellgröße SG an Drehzahlregler 18 weitergegeben werden, die an die Hauptleistungsteilnehmer 4, 6 angeschlossen sind. Die Hauptleistungsteilnehmer 4, 6 können zur Kommunikation untereinander verbunden sein, um zu bestimmen, welcher Drehzahlregler 18 die Regelung der Drehzahl durch eine Veränderung der Leistungsabgabe und/oder Leistungsaufnahme des Hauptleistungsteilnehmers 4, 6, an den er angeordnet ist, übernimmt und somit aktiv ist. Alternativ oder zusätzlich können die Drehzahlregler 18 mit der Leistungsverwaltungseinrichtung 14 verbunden sein, wobei diese bestimmen kann, welcher Drehzahlregler 18 aktiv ist. Welcher Drehzahlregler aktiv ist, kann beispielsweise davon abhängig sein, wie groß die von dem Regler 12 ermittelte Stellgröße SG ist und/oder sie kann abhängig sein von der Leistungsanforderung des Leistungsteilnehmers 2 und oder von der Differenz zwischen Ist-Drehzahl ID und Soll-Drehzahl SD. Die Ist-Drehzahl ID und die Soll-Drehzahl SD werden dabei stetig überprüft und angepasst.

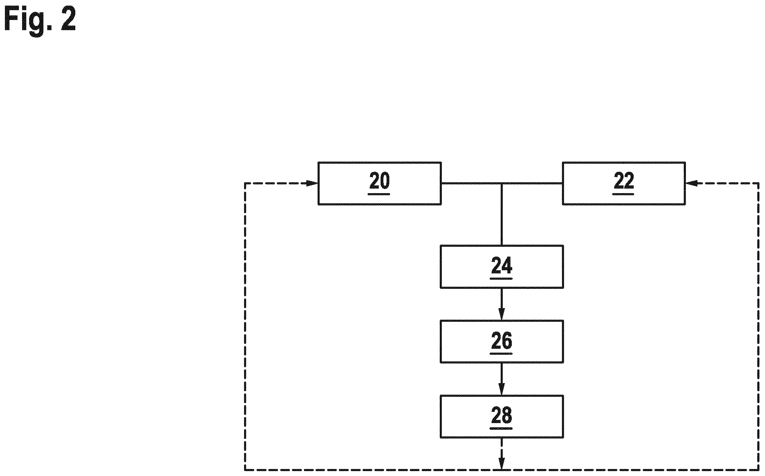

Figur 2 zeigt einen Ablauf des Verfahrens zur Steuerung mit der Steuerung 1 aus Figur 1. In einem Schritt 20, kann durch einen Sensor und/oder durch ein Steuergerät eines Hauptleistungsteilnehmers 4, 6, siehe Figur 1, die Ist-Drehzahl der Welle 8 bestimmt werden. Gleichzeitig und/oder kurz vor oder nach diesem Schritt 20, aber vor einem Schritt 24, wird der Schritt 22 ausgeführt, bei dem eine Soll-Drehzahl ermittelt wird, beispielsweise durch die Leistungsverwaltungseinrichtung 14, siehe Figur 1. Danach wird vorzugsweise die Differenz der Drehzahl ermittelt und daraus in Schritt 24 eine Stellgröße SG bestimmt. Nach dem Schritt 24 wird der Schritt 26 ausgeführt, bei dem bestimmt wird, welcher Hauptleistungsteilnehmer 4, 6 welcher Drehzahlregler 18 aktiv und welcher Drehzahlregler 18 inaktiv ist. Der Hauptleistungsteilnehmer 4, 6 mit dem inaktiven Drehzahlregler 18 wird drehmomentabhängig gesteuert, anstatt durch seinen Drehzahlregler 18. Nach dem Schritt 26 wird im Schritt 28 durch den Drehzahlregler 18, der aktiv ist, der Hauptleistungsteilnehmer 4, 6, so gesteuert, dass sich die Ist-Drehzahl der Soll-Drehzahl anpasst. Danach beginnt der Ablauf von vorne.

Es ist außerdem möglich, dass der Schritt 26 vor dem Schritt 24 ausgeführt wird, wenn beispielsweise durch die Bestimmung der Leistungsanforderung durch die Leistungsverwaltungseinrichtung 14 von dieser bestimmt wird, welcher Drehzahlregler aktiv ist.

Ist ein Drehzahlregler 18 in der Steuerung 1 integriert und kann beide Hauptleistungsteilnehmer 4, 6 ansteuern, so kann in Schritt 26 bestimmt werden, welcher Hauptleistungsteilnehmer 4, 6 von dem Drehzahlregler 18 angesteuert wird.

## Patentansprüche

1. Steuerung für eine mobile Arbeitsmaschine, wobei die Steuerung zumindest zwei Hauptleistungsteilnehmer (4, 6) und zumindest einen Leistungsteilnehmer (2) aufweist, der zumindest eine Leistungsanforderung hat, wobei die Hauptleistungsteilnehmer (4, 6) und der Leistungsteilnehmers (2) zur Aufnahme und/oder Abgabe von Leistung konfiguriert sind, wobei die Leistung über eine rotierende Welle (8) zwischen dem Leistungsteilnehmer (2) und den Hauptleistungsteilnehmern (4, 6) übertragbar ist, wobei die Steuerung zumindest einen Drehzahlregler (18) aufweist, wobei der Drehzahlregler (18) die Drehzahl der rotierenden Welle (8) über eine Leistungsumwandlung eines der Hauptleistungsteilnehmer (4, 6) regelt, **dadurch gekennzeichnet, dass** eine Auswahl des Hauptleistungsteilnehmers (4, 6), der zur Drehzahlregelung der Welle (8) eingesetzt ist, in Abhängigkeit einer Änderung der Leistungsanforderung des Leistungsteilnehmers (2) erfolgt.

2. Steuerung gemäß Anspruch 1, wobei diese zumindest zwei Drehzahlregler (18) aufweist, wobei ein jeweiliger Drehzahlregler (18) einem der Hauptleistungsteilnehmer zuordenbar ist.

3. Steuerung gemäß einem der Ansprüche 1 bis 2, wobei der Hauptleistungsteilnehmer (4, 6), ein Drehmoment einregelt, der nicht zur Drehzahlreglung der Welle eingesetzt ist.

4. Steuerung gemäß einem der Ansprüche 1 bis 3, wobei diese eine Leistungsverwaltungseinrichtung (14) aufweist, die eine aktuellen oder zukünftigen Leistungsanforderung des Leistungsteilnehmers (2) und/oder der Hauptleistungsteilnehmer (4, 6) erfasst und/oder wobei diese ein Leistungspotential und/oder die Leistungsaufnahme und/oder die Leistungsabgabe der Hauptleistungsteilnehmer (4, 6) erfasst.

5. Steuerung gemäß Anspruch 4, wobei die Leistungsverwaltungseinrichtung (14) die Leistungsaufnahme und/oder die Leistungsabgabe zumindest eines Hauptleistungsteilnehmers (4, 6) entsprechend der Leistungsanforderung des zumindest einen Leistungsteilnehmers (2) und/oder der Hauptleistungsteilnehmer (4, 6) vorsteuert.

6. Steuerung gemäß einem der Ansprüche 1 bis 5, wobei ein Hauptleistungsteilnehmer (4, 6) eine höhere Dynamik aufweist, als der andere Hauptleistungsteilnehmer (4, 6).

7. Steuerung gemäß Anspruch 6, wobei der Hauptleistungsteilnehmer (4, 6), der die niedrigere Dynamik aufweist, eine höhere Leistung zum Antrieb der Welle (8) freisetzten kann, als der andere Hauptleistungsteilnehmer (4, 6).

8. Steuerung gemäß Anspruch 7, wobei der Hauptleistungsteilnehmer (4, 6) mit der höheren Dynamik die Drehzahlregelung übernimmt, wenn Lastwechsel erfolgen, die zu diesem Zeitpunkt bei einer oder der Vorsteuerung unberücksichtigt sind.

9. Steuerung gemäß einem der Ansprüche 1 bis 8, wobei ein Hauptleistungsteilnehmer (4, 6) ein Verbrennungsmotor (4, 6) ist und der andere Hauptleistungsteilnehmer (4, 6) ein Elektromotor (4, 6) ist.

10. Steuerung gemäß Anspruch 9, wobei der Elektromotor (4, 6) eine höhere Dynamik und eine niedrigere Leistung zum Antrieb der Welle (8) hat, als der Verbrennungsmotor (4, 6).

11. Verfahren zur Steuerung einer mobilen Arbeitsmaschine mit der Steuerung (1) gemäß einem der Ansprüche 1 bis 10, aufweisend die Schritte:
- Erfassen einer Soll-Drehzahl (SD) und einer Ist-Drehzahl (ID),
- Ermitteln einer Stellgröße (SG), und
- Regeln der Drehzahl in Abhängigkeit der Stellgröße (SG) durch den oder einen der Drehzahlregler (18) durch Ansteuerung eines der oder des zugeordneten Hauptleistungsteilnehmer/s, wobei der zumindest eine weitere Hauptleistungsteilnehmer (4, 6) drehmomentabhängig gesteuert wird.

12. Arbeitsmaschine mit der Steuerung (1) gemäß einem der Ansprüche 1 bis 10.

## Claims

1. Control system for a mobile working machine, wherein the control system has at least two main power participants (4, 6) and at least one power participant (2) that has at least one power requirement, wherein the main power participants (4, 6) and the power participant (2) are configured so as to consume and/or output power, wherein the power is able to be transferred between the power participant (2) and the main power participants (4, 6) via a rotating shaft (8), wherein the control system has at least one speed regulator (18), wherein the speed regulator (18) regulates the speed of the rotating shaft (8) by converting power of one of the main power participants (4, 6), **characterized in that** the main power participant (4, 6) that is used to regulate the speed of the shaft (8) is selected on the basis of a change in the power requirement of the power participant (2).

2. Control system according to Claim 1, wherein said control system has at least two speed regulators (18), with a respective speed regulator (18) being able to be associated with one of the main power participants.

3. Control system according to either of Claims 1 and 2, wherein the main power participant (4, 6) sets a torque that is not used to regulate the speed of the shaft.

4. Control system according to one of Claims 1 to 3, wherein said control system has a power management device (14) that acquires a current or future power requirement of the power participant (2) and/or of the main power participants (4, 6) and/or wherein said control system acquires a power potential and/or the power consumption and/or the power output of the main power participants (4, 6).

5. Control system according to Claim 4, wherein the power management device (14) pilot-controls the power consumption and/or the power output of at least one main power participant (4, 6) in accordance with the power requirement of the at least one power participant (2) and/or of the main power participants (4, 6).

6. Control system according to one of Claims 1 to 5, wherein one main power participant (4, 6) has higher dynamics than the other main power participant (4, 6).

7. Control system according to Claim 6, wherein the main power participant (4, 6) that has the lower dynamics is able to release a greater amount of power to drive the shaft (8) than the other main power participant (4, 6).

8. Control system according to Claim 7, wherein the main power participant (4, 6) having the higher dynamics takes over the speed regulation upon the occurrence of load changes that are not taken into consideration in a or the pilot control operation at this time.

9. Control system according to one of Claims 1 to 8, wherein one main power participant (4, 6) is a combustion engine (4, 6) and the other main power participant (4, 6) is an electric motor (4, 6).

10. Control system according to Claim 9, wherein the electric motor (4, 6) has higher dynamics and a lower power for driving the shaft (8) than the combustion engine (4, 6).

11. Method for controlling a mobile working machine using the control system (1) according to one of Claims 1 to 10, comprising the steps of:
- acquiring a setpoint speed (SD) and an actual speed (ID),
- determining a manipulated variable (SG), and
- regulating the speed on the basis of the manipulated variable (SG) using the or one of the speed regulators (18) by actuating one of the or the associated main power participant(s), wherein the at least one further main power participant (4, 6) is controlled in a torque-dependent manner.

12. Working machine having the control system (1) according to one of Claims 1 to 10.

## Revendications

1. Commande pour une machine de travail mobile, la commande présentant au moins deux utilisateurs de puissance principaux (4, 6) et au moins un utilisateur de puissance (2) ayant au moins une demande de puissance, les utilisateurs de puissance principaux (4, 6) et l'utilisateur de puissance (2) étant configurés pour absorber et/ou fournir de la puissance, la puissance pouvant être transmise par un arbre tournant (8) entre l'utilisateur de puissance (2) et les utilisateurs de puissance principaux (4, 6), la commande présentant au moins un régulateur de vitesse de rotation (18), le régulateur de vitesse de rotation (18) régulant la vitesse de rotation de l'arbre tournant (8) par une conversion de puissance d'un des utilisateurs de puissance principaux (4, 6),
**caractérisée en ce qu'**une sélection de l'utilisateur de puissance principal (4, 6) qui est mis en œuvre pour la régulation de vitesse de rotation de l'arbre (8) est effectuée en fonction d'une variation de la demande de puissance de l'utilisateur de puissance (2).

2. Commande selon la revendication 1 présentant au moins deux régulateurs de vitesse de rotation (18), un régulateur de vitesse de rotation (18) respectif pouvant être associé à l'un des utilisateurs de puissance principaux.

3. Commande selon l'une quelconque des revendications 1 à 2, l'utilisateur de puissance principal (4, 6) régulant un couple qui n'est pas mis en œuvre pour la régulation de vitesse de rotation de l'arbre.

4. Commande selon l'une quelconque des revendications 1 à 3, dans laquelle celle-ci présente un dispositif de gestion de puissance (14) qui détecte une demande de puissance actuelle ou future de l'utilisateur de puissance (2) et/ou des utilisateurs de puissance principaux (4, 6), et/ou dans laquelle celle-ci détecte un potentiel de puissance et/ou l'absorption de puissance et/ou la fourniture de puissance des utilisateurs de puissance principaux (4, 6).

5. Commande selon la revendication 4, dans laquelle le dispositif de gestion de puissance (14) effectue une commande pilote de l'absorption de puissance et/ou de la fourniture de puissance d'au moins un utilisateur de puissance principal (4, 6) selon la demande de puissance de l'au moins un utilisateur de puissance (2) et/ou des utilisateurs de puissance principaux (4, 6).

6. Commande selon l'une quelconque des revendications 1 à 5, dans laquelle un utilisateur de puissance principal (4, 6) présente une dynamique plus élevée que l'autre utilisateur de puissance principal (4, 6).

7. Commande selon la revendication 6, dans laquelle l'utilisateur de puissance principal (4, 6) qui présente la dynamique inférieure peut libérer une puissance plus élevée pour entraîner l'arbre (8) que l'autre utilisateur de puissance principal (4, 6).

8. Commande selon la revendication 7, dans laquelle l'utilisateur de puissance principal (4, 6) ayant la dynamique plus élevée prend en charge la régulation de vitesse de rotation lorsque des commutations de charge ont lieu qui ne sont pas prises en compte à ce momentlà pour une ou la commande pilote.

9. Commande selon l'une quelconque des revendications 1 à 8, dans laquelle un utilisateur de puissance principal (4, 6) est un moteur à combustion interne (4, 6) et l'autre utilisateur de puissance principal (4, 6) est un moteur électrique (4, 6).

10. Commande selon la revendication 9, dans laquelle le moteur électrique (4, 6) présente une dynamique plus élevée et une puissance inférieure pour entraîner l'arbre (8) que le moteur à combustion interne (4, 6).

11. Procédé de commande d'une machine de travail mobile comprenant la commande (1) selon l'une quelconque des revendications 1 à 10, présentant les étapes consistant à :
- détecter une vitesse de rotation théorique (SD) et une vitesse de rotation réelle (ID),
- déterminer une grandeur de réglage (SG), et
- réguler la vitesse de rotation en fonction de la grandeur de réglage (SG) par ledit régulateur ou l'un des régulateurs de vitesse de rotation (18) par un pilotage d'un des utilisateurs de puissance principaux associés ou dudit utilisateur de puissance principal associé, ledit au moins un autre utilisateur de puissance principal (4, 6) étant commandé en fonction du couple.

12. Machine de travail comprenant la commande (1) selon l'une quelconque des revendications 1 à 10.
